# EUROPÄISCHE PATENTSCHRIFT

(11) **EP 4 112 304 B1**
(45) Veröffentlichungstag und Bekanntmachung des Hinweises auf die Patenterteilung: **31.07.2024**
(21) Anmeldenummer: 21182314.1
(22) Anmeldetag: 29.06.2021
(51) Int. Cl.: B32B 43/00, B32B 37/12, B32B 37/20, A61F 13/02

(54) **VERFAHREN ZUM ABLÖSEN EINER MATERIALSCHICHT VON EINER MEHRERE MATERIALSCHICHTEN UMFASSENDEN MATERIALBAHN**
METHOD FOR SEPARATING A MATERIAL LAYER FROM A MATERIAL WEB COMPRISING SEVERAL MATERIAL LAYERS
PROCÉDÉ DE SÉPARATION D'UNE COUCHE DE MATIÈRE D'UNE BANDE DE MATIÈRE COMPRENANT PLUSIEURS COUCHES DE MATIÈRE

(43) Veröffentlichungstag der Anmeldung: 04.01.2023
(73) Patentinhaber: Harro Höfliger Verpackungsmaschinen GmbH, 71573 Allmersbach im Tal (DE)
(72) Erfinder: Platzer, Jürgen, 71573 Allmersbach im Tal (DE); Signore, Andreas, 71573 Allmersbach im Tal (DE)
(74) Vertreter: Gleim Petri Patent- und Rechtsanwaltspartnerschaft mbB

(56) Entgegenhaltungen:
- DE-U1- 202013 002 818
- DE-U1- 202014 009 847

## Beschreibung

### TECHNISCHES GEBIET

Die Erfindung betrifft ein Verfahren, mittels dem eine Materialschicht von einer mehrere Materialschichten umfassenden Materialbahn planmäßig abgelöst werden kann. Ein solcher Vorgang kann bei bahnverarbeitenden Prozessen erforderlich sein, beispielsweise um eine Schutzschicht von einer Materialbahn abzulösen und diese in einem weiteren Verfahrensschritt durch eine alternative Materialschicht zu ersetzen. Dies kann beispielsweise bei der Herstellung von Wundpflastern oder anderen therapeutischen Pflastern der Fall sein.

### STAND DER TECHNIK

Zum Ablösen einer Materialschicht von einer mehrere Materialschichten umfassenden Materialbahn kann eine Abziehkante oder eine Abziehrolle verwendet werden. Bei der Verwendung einer Abziehkante können verhältnismäßig kleine Winkel zwischen der Materialbahn und der abgelösten Materialschicht erreicht werden, so dass eine kompakte Bauweise der Vorrichtung möglich ist. Auch wird die Materialbahn durch den kleinen Winkel kaum aus der Ebene ihrer Bahnlaufrichtung hinaus abgelenkt. Eine solche Ablenkung kann eine Verzerrung der Materialbahn bedingen, insbesondere wenn die Materialbahn neben der abzulösenden Materialschicht weitere Materialschichten umfasst.

Bei der Verwendung einer Abziehrolle ist der Winkel zwischen der Materialbahn und der abgelösten Materialschicht in der Regel deutlich größer. Insofern besteht eine größere Gefahr der Ablenkung der Materialbahn aus ihrer Ebene, so dass in der Regel nur geringere Bahngeschwindigkeiten möglich sind. Um höhere Bahngeschwindigkeiten zu erreichen, ist es bekannt, die Abziehkante oder die Abziehrolle auf eine Temperatur von etwa 30 bis 100 Grad Celsius zu erwärmen, was eine leichtere Ablösung der Materialschicht ermöglichen soll. Zusätzlich oder alternativ dazu kann auch die Materialbahn auf eine Temperatur von etwa 30 bis 100 Grad Celsius erwärmt werden.

Aus der DE 20 2013 002 818 U1 ist eine Vorrichtung zum Ablösen einer Materialschicht von einer mehrere Materialschichten umfassenden Materialbahn bekannt, bei der die Abziehkante oder die Abziehrolle kontinuierlich oder taktweise in Vibrationsschwingungen versetzt wird. Dadurch soll eine einfache Ablösung der abzulösenden Materialschicht ermöglicht werden. Folglich sind höhere Bahngeschwindigkeiten möglich. Eine ähnliche Vorrichtung ist aus der DE 20 2014 009 847 U1 bekannt.

Bei den bekannten Vorrichtungen wird in der Regel jeweils lediglich eine einzelne Materialschicht abgelöst. Die übrigen Materialschichten der Materialbahn laufen in der Ebene der Bahnlaufrichtung weiter. Dabei ist die Haftkraft zwischen der abgelösten Materialschicht und der weiterlaufenden Materialbahn regelmäßig geringer als die Haftkräfte zwischen den einzelnen Materialschichten der weiterlaufenden Materialbahn.

### DARSTELLUNG DER ERFINDUNG

Ausgehend von diesem vorbekannten Stand der Technik liegt der Erfindung die Aufgabe zugrunde, ein verbessertes Verfahren zum Ablösen von zumindest einer Materialschicht von einer mehrere Materialschichten umfassenden Materialbahn anzugeben, so dass nicht zwingend die Ablösung derjenigen Materialschicht mit der geringsten Haftkraft erfolgen muss.

Das erfindungsgemäß Verfahren ist durch die Merkmale des Hauptanspruchs 1 gegeben. Sinnvolle Weiterbildungen der Erfindung sind Gegenstand von sich an diesen Anspruch anschließenden weiteren Ansprüchen.

Bei bahnverarbeitenden Prozessen, insbesondere bei der Herstellung von Wundpflastern und anderen therapeutischen Pflastern ist es häufig erforderlich, eine zunächst vorhandene äußere Folienschicht von der restlichen Materialbahn abzulösen, um diese Folienschicht gegen eine alternative Schicht, beispielsweise eine Abdeckfolie, zu ersetzen. Bei den im Stand der Technik bekannten Vorrichtung muss die abzulösende äußere Folienschicht grundsätzlich niedrigere Haftungseigenschaften im Vergleich zu den übrigen Materialschichten besitzen. Teilweise kann es jedoch erforderlich sein, auch solche Materialschichten abzulösen, bei denen die Haftkraft zu einer benachbarten Materialschicht größer ist als die Haftkraft zwischen anderen Materialschichten.

Darüber hinaus hat sich gezeigt, dass das Ablöseverhalten nicht ausschließlich von den Haftungseigenschaften abhängt; vielmehr ist das Ablöseverhalten auch von der Bahngeschwindigkeit abhängig. So findet bei höheren Bahngeschwindigkeiten oftmals kein stabiler Ablöseprozess mehr statt. Stattdessen wird die benachbarte Materialschicht gemeinsam mit der äußersten Materialschicht abgezogen. Dies führt in der Regel dazu, dass die Vorrichtung gestoppt werden muss. Daher wird häufig mit reduzierten Bahngeschwindigkeiten gearbeitet. Der Ablöseprozess stellt daher in der Regel den geschwindigkeitsbegrenzenden Produktionsschritt dar, der die maximale Bahngeschwindigkeit und damit auch die maximale Anzahl an hergestellten Produkten pro Zeiteinheit vorgibt.

Das oben beschriebene Problem tritt insbesondere bei der Verwendung eines Silikongels als Klebeschicht eines späteren therapeutischen Pflasters auf. So zeigt das Silikongel insbesondere bei Bahngeschwindigkeiten von mehr als 12 m/min (Meter pro Minute) die Neigung, mit der äußersten Materialschicht abgezogen zu werden. Dies liegt auch daran, dass die Haftkraft zwischen dem Silikongel und der abzulösenden Folienschicht größer ist als die Haftkraft zwischen dem Silikongel und der benachbarten verbleibenden Materialschicht der Materialbahn. Um die Haftungseigenschaften der äußersten Materialschicht zu der benachbarten Materialschicht (insbesondere zu der Silikongel-Schicht) zu reduzieren, kann daher die offenbarte Vorrichtung, welche nicht unter den Schutzumfang der Ansprüche fällt, eingesetzt werden, bei der zunächst ein Mehrlagenlaminat von der äußersten Materialschicht abgezogen wird.

Eine entsprechende Vorrichtung kann bei bahnverarbeitenden Prozessen insbesondere als zwischengeschaltete Vorrichtung eingesetzt werden. Dabei wird eine Endlosrolle der Materialbahn zunächst durch die Vorrichtung geleitet, um anschließend erneut als Endlosrolle zwischengelagert zu werden. Die Haftungseigenschaften der einzelnen Materialschichten der Materialbahn werden dabei so verändert, dass die Haftkraft zwischen der äußersten Materialschicht und dem abgelösten Mehrlagenlaminat nunmehr die geringste Haftkraft zwischen den Materialschichten der Materialbahn darstellt. Wird die so vorbereitete Endlosrolle weiterverarbeitet, lässt sich die äußerste Materialschicht bei deutlich erhöhter Bahngeschwindigkeit sicher ablösen. Dies führt zu einer insgesamt erhöhten Ausbringung der bahnverarbeitenden Vorrichtung.

Bei dem erfindungsgemäßen Verfahren zum Ablösen einer Materialschicht von einer mehrere Materialschichten aufweisenden Materialbahn wird erfindungsgemäß ein Mehrlagenlaminat von der äußersten Materialschicht der Materialbahn abgezogen. Dabei läuft die äußerste Materialschicht in der Bahnebene weiter. Der Abzugswinkel zwischen dem Mehrlagenlaminat und der äußersten Materialschicht beträgt etwa 130 bis 170 Grad, insbesondere etwa 150 bis 170 Grad.

Bei den im Stand der Technik bekannten Verfahren wurde jeweils lediglich eine einzelne Materialschicht von der Materialbahn abgezogen, dabei lief das verbliebene Mehrlagenlaminat der Materialbahn in der Bahnebene weiter. Wird dagegen ein Mehrlagenlaminat von der Materialbahn abgezogen, kommt es insbesondere bei der Verwendung von Silikongel-Schichten als Klebeschichten zu einem deutlich verbesserten Ablöseverfahren. Auf diese Weise ist es möglich, ein Mehrlagenlaminat abzuziehen, bei dem die Haftkraft zumindest zwischen zwei Materialschichten des Mehrlagenlaminats geringer ist als die Haftkraft zwischen dem Mehrlagenlaminat und der verbleibenden einzelnen Materialschicht.

Das erfindungsgemäße Verfahren kann im Rahmen des üblichen bahnverarbeitenden Prozesses ablaufen. In diesem Fall kann das abgezogene Mehrlagenlaminat nach dem Ablösen von der Materialbahn weiterverarbeitet werden, indem beispielsweise eine andere Materialschicht - beispielsweise eine Abdeckfolie - auf das Mehrlagenlaminat aufgebracht wird. Bei einem solchen Verfahren macht sich insbesondere der Vorteil bemerkbar, dass das Ablöseverhalten zwischen den Materialschichten verändert worden ist, so dass auch stärker haftende Materialschichten abgetrennt werden können. Darüber hinaus ist das Ablöseverhalten insgesamt deutlich verbessert ist, so dass es zu weniger Fehlfunktionen kommt.

Vorzugsweise kann bei dem erfindungsgemäßen Verfahren nach dem Ablösen des Mehrlagenlaminats von der äußersten Materialschicht anschließend das Mehrlagenlaminat wieder auf die äußerste Materialschicht zurückgeführt und erneut mit der äußersten Materialschicht verbunden werden. Dadurch kann die Haftkraft zwischen dem Mehrlagenlaminat und der äußersten Materialschicht der Materialbahn stark reduziert werden. Die Materialbahn lässt sich anschließend mit erhöhter Bahngeschwindigkeit weiterverarbeiten, insbesondere das Abziehen der äußersten Materialschicht von der Materialbahn kann bei deutlich höheren Bahngeschwindigkeiten erfolgen. Die vorbereitete Materialbahn kann in diesem Fall beispielsweise zunächst als Endlosrolle zwischengelagert werden, so dass eine weitere Bearbeitung der Materialbahn mit erhöhter Bahngeschwindigkeit möglich ist.

Weitere Vorteile und Merkmale der Erfindung sind den in den Ansprüchen ferner angegebenen Merkmalen sowie den nachstehenden Ausführungsbeispielen zu entnehmen.

### KURZE BESCHREIBUNG DER ZEICHNUNG

Die Erfindung wird im Folgenden anhand der in der Zeichnung dargestellten Ausführungsbeispiele näher beschrieben und erläutert. Es zeigen:
- Fig. 1: eine schematische Darstellung einer ersten Ausführungsform einer Vorrichtung zum Ablösen einer Materialschicht von einer mehrere Materialschichten umfassenden Materialbahn,
- Fig. 2: eine Detailansicht der Vorrichtung gemäß Fig. 1,
- Fig. 3: eine schematische Darstellung einer zweiten Ausführungsform einer Vorrichtung zum Ablösen einer Materialschicht von einer mehrere Materialschichten umfassenden Materialbahn.

### WEGE ZUM AUSFÜHREN DER ERFINDUNG

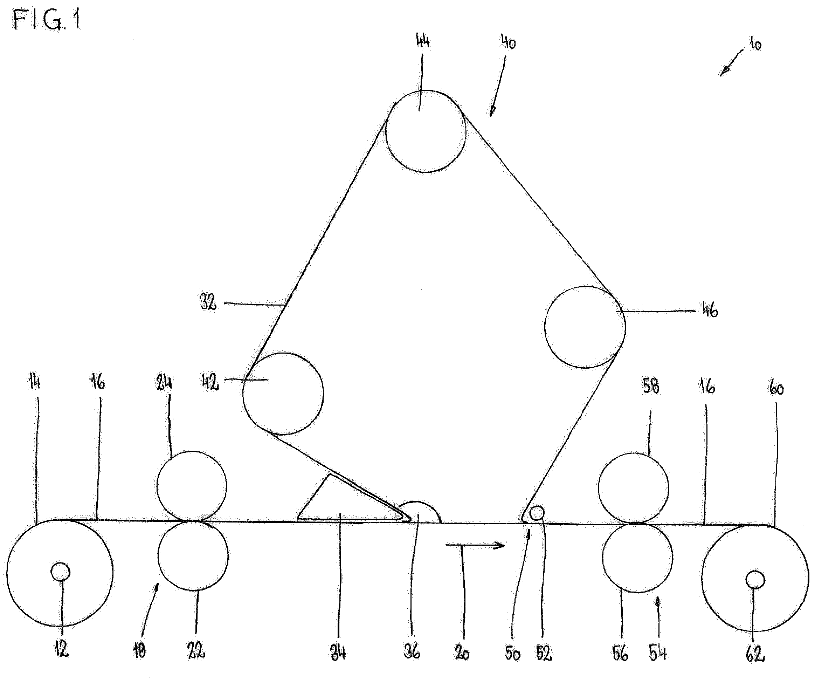

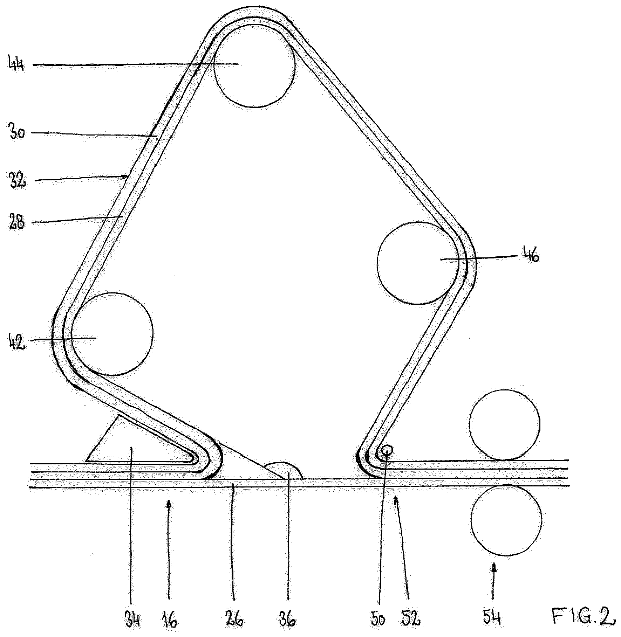

Die Vorrichtung 10 gemäß Fig. 1 und 2 besitzt eine Abwickelwelle 12, an der eine Endlosrolle 14 einer Materialbahn 16 positioniert ist. Mittels einer Transportvorrichtung 18 wird die Materialbahn 16 in Bahnlaufrichtung 20 transportiert und dabei nach und nach von der Endlosrolle 14 abgezogen. Die Transportvorrichtung 18 besitzt im vorliegenden Beispielsfall eine untere Transportrolle 22 und eine obere Transportrolle 24, zwischen denen die Materialbahn 16 verläuft.

Die Materialbahn 16 besteht im vorliegenden Beispielsfall aus insgesamt drei Materialschichten: einer Folienschicht 26, einer Klebeschicht 28 und einer weiteren Folienschicht 30 (siehe Fig. 2). Die Folienschicht 26, die in Fig. 2 als unterste Materialschicht dargestellt ist, kann insbesondere als Papierfolie, beispielsweise als silikonisierte Papierfolie, ausgebildet sein. Die Klebeschicht 28 enthält regelmäßig einen Silikonkleber oder einen hydrocolloidalen Kleber. Durch die Klebeschicht 28 kann beispielsweise ein Wundpflaster, das aus der Materialbahn 16 hergestellt werden kann, auf der menschlichen Haut befestigt werden. Die Folienschicht 30 kann beispielsweise als Kunststofffolie ausgebildet sein. Die Haftkraft zwischen der Folienschicht 26 und der Klebeschicht 28 ist dabei deutlich größer als die Haftkraft zwischen der Klebeschicht 28 und der Folienschicht 30.

Um aus der Materialbahn 16 beispielsweise Wundpflaster herstellen zu können, muss die untere Folienschicht 26 von der Klebeschicht 28 abgelöst werden. Ein solcher Verfahrensschritt ist aus dem Stand der Technik grundsätzlich bereits bekannt, solange die Haftkraft zwischen der abzulösenden unteren Folienschicht 26 und der Klebeschicht 28 am geringsten ist. Mit der Vorrichtung 10 wird jedoch nicht die untere Folienschicht 26 abgelöst, vielmehr wird ein Mehrlagenlaminat 32, das im vorliegenden Beispielsfall aus der Klebeschicht 28 und der Folienschicht 30 besteht, von der Folienschicht 26 abgelöst. Die Folienschicht 26 läuft daher in der Ebene der Materialbahn 16 weiter, während das Mehrlagenlaminat 32 abgelöst wird. Dadurch ist es möglich, die Folienschicht 26 von dem Mehrlagenlaminat 32 zu trennen, obwohl die Haftkraft zwischen den Schichten 28, 30 des Mehrlagenlaminats 32 geringer ist als die Haftkraft zwischen dem Mehrlagenlaminat 32 und der Folienschicht 26.

Das Ablösen des Mehrlagenlaminats 32 erfolgt im vorliegenden Beispielsfall über eine Abziehkante 34. Die Abziehkante 34 kann in Schwingungen versetzt werden, wie dies beispielsweise aus der DE 20 2013 002 818 U1 bekannt ist. Das Mehrlagenlaminat 32 lässt sich dabei leicht von der unteren Folienschicht 26 lösen, ohne dass die Klebeschicht 28 des Mehrlagenlaminats 32 an der Folienschicht 26 anhaften würde. Dadurch sind bereits in diesem Verfahrensschritt höhere Bahngeschwindigkeiten möglich, was die Produktivität der Vorrichtung 10 erhöht. Statt der Abziehkante 34 könnte auch eine Abziehrolle eingesetzt werden.

Der Abziehwinkel 36 zwischen dem abgezogenen Mehrlagenlaminat 32 und der verbleibenden Folienschicht 26 beträgt im vorliegenden Beispielsfall 160 Grad. Das abgezogene Mehrlagenlaminat 32 wird anschließend über eine Umlenkeinheit 40 geleitet. Die Umlenkeinheit 40 besitzt im vorliegenden Beispielsfall insgesamt drei Umlenkrollen 42, 44, 46. Durch die Umlenkrollen 42, 44, 46 wird das Mehrlagenlaminat 32 wieder auf die verbleibende Folienschicht 26 der Materialbahn 16 zurückgeführt. Das Mehrlagenlaminat 32 wird mittels einer Laminiervorrichtung 50 auf der Folienschicht 26 aufgebracht. Dazu besitzt die Laminiervorrichtung 50 eine Umlenkrolle 52, über die das Mehrlagenlaminat 32 auf der Folienschicht 26 aufgebracht wird. Das Mehrlagenlaminat 32 wird dabei mit einem gewissen Druck auf die Folienschicht 26 aufgebracht, so dass eine ausreichend feste Verbindung zwischen der Klebeschicht 28 des Mehrlagenlaminats 32 und der Folienschicht 26 erreicht wird. Allerdings ist die Haftung zwischen der Klebeschicht 28 und der Folienschicht 26 nach dem Abziehen und erneuten Laminieren deutlich reduziert.

Die Materialbahn 16 wird anschließend mittels einer weiteren Transportvorrichtung 54 weiter in Bahnlaufrichtung 20 transportiert. Die Transportvorrichtung 54 besitzt im vorliegenden Beispielsfall eine untere Transportrolle 56 und eine obere Transportrolle 58, zwischen denen die Materialbahn 16 verläuft. Die Materialbahn 16 wird bei der Vorrichtung 10 gemäß Fig. 1 und 2 zu einer neuen Endlosrolle 60 aufgewickelt. Dazu besitzt die Vorrichtung 10 eine Aufwickelwelle 62, auf der sich nach und nach die Endlosrolle 60 bildet, während die Endlosrolle 14 auf der Abwickelwelle 12 nach und nach abgewickelt wird.

Grundsätzlich können auch andere Materialbahnen 16 mit der Vorrichtung 10 bearbeitet werden. So kann insbesondere die Folienschicht 30 des Mehrlagenlaminats 32 auch aus mehreren Materialschichten bestehen. Auch können die Materialschichten 26, 28, 30 können auch aus anderen Materialien bestehen.

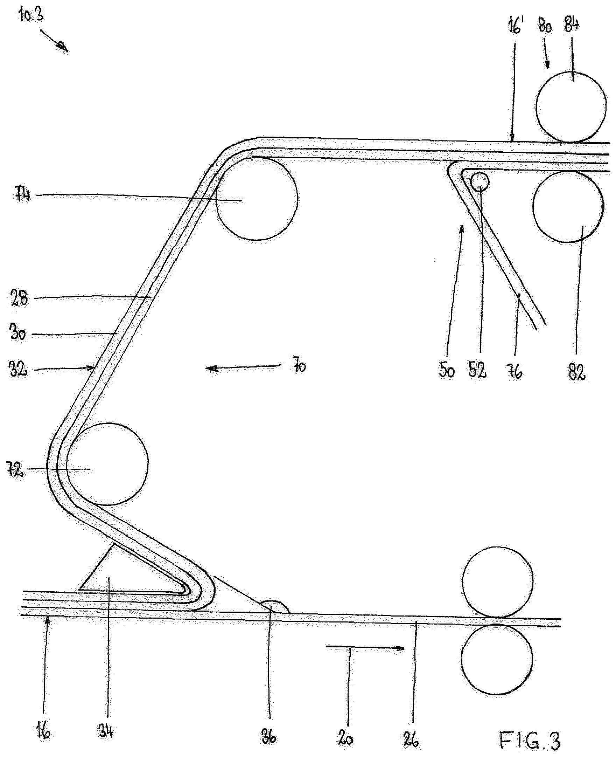

Eine zweite Ausführungsform der Vorrichtung 10.3 ist in Fig. 3 dargestellt. Die Vorrichtung 10.3 besitzt eine hier nicht dargestellte Abwickelwelle 12, an der die Endlosrolle 14 einer Materialbahn 16 positioniert ist. Mittels einer hier ebenfalls nicht dargestellten Transportvorrichtung 18 wird die Materialbahn 16 in Bahnlaufrichtung 20 transportiert und dabei nach und nach von der Endlosrolle 14 abgezogen.

Mit der Vorrichtung 10.3 wird wie auch bei der Vorrichtung 10 ein Mehrlagenlaminat 32, das im vorliegenden Beispielsfall aus der Klebeschicht 28 und der Folienschicht 30 besteht, von der Folienschicht 26 abgelöst. Die Folienschicht 26 läuft daher in der Ebene der Materialbahn 16 weiter, während das Mehrlagenlaminat 32 abgelöst wird. Das Ablösen des Mehrlagenlaminats 32 erfolgt im vorliegenden Beispielsfall über eine Abziehkante 34. Der Abziehwinkel 36 zwischen dem abgezogenen Mehrlagenlaminat 32 und der verbleibenden Folienschicht 26 beträgt im vorliegenden Beispielsfall 160 Grad.

Die Folienschicht 26 wird anschließend mittels der Transportvorrichtung 54 wieter in Bahnlaufrichtung 20 transportiert. Im Gegensatz zu der Vorrichtung 10 wird die Folienschicht 26 jedoch nicht wieder mit dem Mehrlagenlaminat 32 zusammengeführt. Vielmehr wird die Folienschicht 26 bereits an dieser Stelle verworfen.

Das abgezogene Mehrlagenlaminat 32 wird anschließend über eine Umlenkeinheit 70 geleitet. Die Umlenkeinheit 70 besitzt im vorliegenden Beispielsfall insgesamt zwei Umlenkrollen 72, 74. Durch die Umlenkrollen 72, 74 wird das Mehrlagenlaminat 32 in eine alternative Bahnebene überführt, um anschließend direkt weiterverarbeitet zu werden. Dazu wird eine alternative Folienschicht 76 auf die Klebeschicht 28 des Mehrlagenlaminats 32 aufgebracht. Dies erfolgt mittels der Laminervorrichtung 50. Die Folienschicht 76 wird dabei mit einem gewissen Druck auf der Klebeschicht 28 des Mehrlagenlaminats 32 aufgebracht, so dass eine ausreichend feste Verbindung zwischen der Klebeschicht 28 des Mehrlagenlaminats 32 und der Folienschicht 76 erreicht wird. Die neue Materialbahn 16' wird mittels einer Transportvorrichtung 80 weitertransportiert. Die Transportvorrichtung 80 besitzt im vorliegenden Beispielsfall eine untere Transportrolle 82 und eine obere Transportrolle 84, zwischen denen die Materialbahn 16' verläuft.

## Patentansprüche

1. Verfahren zum Ablösen einer Materialschicht (26) von einer mehrere Materialschichten (26, 28, 30) aufweisenden Materialbahn (16) mit folgenden Verfahrensschritten:
- ein Mehrlagenlaminat (32) wird in einem Abzugswinkel (36) von etwa 130 bis 170 Grad, vorzugsweise von etwa 150 bis 170 Grad von der äußersten Materialschicht (26) der Materialbahn (16) abgezogen,
- die äußerste Materialschicht (26) läuft in der Bahnebene weiter.

2. Verfahren nach Anspruch 1,
- **dadurch gekennzeichnet, dass**
- das Mehrlagenlaminat (32) nach dem Abziehen erneut auf die äußerste Materialschicht (26) zurückgeführt wird,
- das Mehrlagenlaminat (32) anschließend erneut mit der äußersten Materialschicht (26) verbunden wird.

3. Verfahren nach Anspruch 2,
- **dadurch gekennzeichnet, dass**
- die äußerste Materialschicht (26) anschließend von der Materialbahn (16) abgezogen wird, wobei das Mehrlagenlaminat (32) in der Bahnebene weiterläuft.

4. Verfahren nach Anspruch 1,
- **dadurch gekennzeichnet, dass**
- das Mehrlagenlaminat (32) mit einer alternativen Folienschicht (76) verbunden wird.

## Claims

1. Method for detaching a material layer (26) from a material web (16) comprising multiple material layers (26, 28, 30), having the following method steps:
- a multi-ply laminate (32) is peeled off of the outermost material layer (26) of the material web (16) at a peel-off angle (36) of approximately 130 to 170 degrees, preferably of approximately 150 to 170 degrees,
- the outermost material layer (26) continues on in the plane of the web.

2. Method according to Claim 1,
- **characterized in that**
- the multi-ply laminate (32) is returned onto the outermost material layer (26) after being peeled off,
- the multi-ply laminate (32) is then reconnected to the outermost material layer (26).

3. Method according to Claim 2,
- **characterized in that**
- the outermost material layer (26) is then peeled off of the material web (16), the multi-ply laminate (32) continuing on in the plane of the web.

4. Method according to Claim 1,
- **characterized in that**
- the multi-ply laminate (32) is connected to an alternative film layer (76).

## Revendications

1. Procédé de retrait d'une couche de matière (26) d'une bande de matière (16) comportant plusieurs couches de matière (26, 28, 30), ledit procédé comprenant les étapes suivantes :
- un stratifié multicouche (32) est retiré de la couche de matière la plus extérieure (26) de la bande de matière (16) suivant un angle de retrait (36) d'environ 130 à 170 degrés, de préférence d'environ 150 à 170 degrés,
- la couche de matière la plus extérieure (26) se poursuit dans le plan de la bande.

2. Procédé selon la revendication 1,
- **caractérisé en ce que**
- le stratifié multicouche (32) est ramené sur la couche de matière la plus extérieure (26) après avoir été retiré,
- le stratifié multicouche (32) est ensuite relié à nouveau à la couche de matière la plus extérieure (26).

3. Procédé selon la revendication 2,
- **caractérisé en ce que**
- la couche de matière la plus extérieure (26) est ensuite retirée de la bande de matière (16), le stratifié multicouche (32) se poursuivant dans le plan de la bande.

4. Procédé selon la revendication 1,
- **caractérisé en ce que**
- le stratifié multicouche (32) est relié à une couche de film alternative (76).
